# EUROPÄISCHE PATENTANMELDUNG

(11) **EP 2 625 994 A2**
(43) Veröffentlichungstag der Anmeldung: **14.08.2013**
(21) Anmeldenummer: 13000583.8
(22) Anmeldetag: 05.02.2013
(51) Int. Cl.: A47K 5/13, A47K 5/122

(54) **Spenderflasche und Spendervorrichtung**

(30) Priorität: 10.02.2012 DE 102012002647
(71) Anmelder: CSD Cosmetic-Systems Development uGmbH, 22089 Hamburg (DE)
(72) Erfinder: Schwenkenberg, Horst, 25469 Halstenbek (DE)
(74) Vertreter: Börjes-Pestalozza, Heinrich

(57) **Zusammenfassung**

Bei einer Spenderflasche (1) mit einem Flaschenkörper (2) und einer Verschlusskappe (5) und einem in den Flaschenkörper (2) eingesetzten Ventilelement (6), mit welchem eine Austrittsöffnung (8) der Verschlusskappe (5) verschließbar und öffenbar ist, wird vorgeschlagen, an einer Trennplatte (21), welche eine in der Verschlusskappe (5) ausgebildete Dosierkammer (23) von dem Innenraum (14) des Flaschenkörpers (2) abtrennt, eine Durchtrittsöffnung (22) auszubilden und ein Verschlusselement (24) mit dem Ventilelement (6) derart zu koppeln, dass das Verschlusselement (24) bei geöffneter Austrittsöffnung (8) die Durchtrittsöffnung (22) verengt oder verschließt und bei verschlossener Austrittsöffnung (8) die Durchtrittsöffnung (22) freigibt (Figur 1).

## Beschreibung

Die Erfindung betrifft eine Spenderflasche, insbesondere in Überkopfbauweise, mit einer auf einen Flaschenhals eines Flaschenkörpers dicht aufgesetzten Verschlusskappe und mit einem in den Flaschenkörper eingesetzten Ventilelement, wobei das Ventilelement einen Ventilstößel aufweist, welcher zwischen einer Schließstellung, in welcher eine Austrittsöffnung der Verschlusskappe durch den Ventilstößel verschlossen ist, und einer Offenstellung, in welcher die Austrittsöffnung geöffnet ist, beweglich ist, und wobei das Ventilelement wenigstens einen Betätigungsschenkel aufweist, welcher in einem Innenraum des Flaschenkörpers angeordnet und mit dem Ventilstößel derart gekoppelt ist, dass durch einen außenseitig auf eine elastische Seitenwand des Flaschenkörpers eingebrachten Druck der Ventilstößel aus der Schließstellung in die Offenstellung überführbar ist, und wobei in dem Flaschenhals eine Trennplatte mit einer Durchtrittsöffnung ausgebildet oder angeordnet ist, durch welche eine von der Verschlusskappe gebildete Dosierkammer von dem Innenraum des Flaschenkörpers abgeteilt ist, wobei der Ventilstößel durch die Durchtrittsöffnung geführt ist.

Die Erfindung betrifft weiter eine Spendervorrichtung mit einem Halter und einer in den Halter eingesetzten oder einsetzbaren Spenderflasche.

Derartige Spenderflaschen und Spendervorrichtungen werden im Auftrag der Anmelderin gefertigt und vertrieben und haben sich bewährt, da durch den Ventilstößel ein dichter Verschluss der Spenderflasche erreicht wird, welcher durch einen Druck auf die Seitenwand leicht öffenbar ist. Die Spenderflaschen sind hierbei in der Spendervorrichtung nach Gebrauch auswechselbar.

Bei den bekannten Spenderflaschen ist es wünschenswert, wenn bei der Druckbeaufschlagung der Spenderflasche immer eine definierte Menge der in der Spenderflasche bereitgehaltenen Flüssigkeit abgegeben wird. Bei den bekannten Spenderflaschen kann dies dadurch erreicht werden, dass die Seitenwand mit einem definierten Druck beaufschlagt wird, was bei manueller Betätigung nicht möglich ist.

Der Erfindung liegt die Aufgabe zugrunde, die Gebrauchseigenschaften einer Spenderflasche zu verbessern.

Zur Lösung dieser Aufgabe ist erfindungsgemäß bei einer Spenderflasche der eingangs beschriebenen Art vorgesehen, dass an dem Ventilstößel ein Verschlusselement ausgebildet ist, welches die Durchtrittsöffnung in Offenstellung des Ventilstößels verengt oder verschließt und welches die Durchtrittsöffnung in Schließstellung des Ventilstößels freigibt. Von Vorteil ist dabei, dass das Verschlusselement bei geöffneter Austrittsöffnung den Austausch von Füllmedium, beispielsweise einer zähflüssigen oder pastösen Flüssigkeit wie Seife, Creme oder dergleichen kosmetisches oder hygienisches Fluid, vermindert oder weitestgehend oder sogar vollständig verhindert. Somit wird automatisch sichergestellt, dass bei geöffneter Austrittsöffnung die Dosierkammer im Wesentlichen oder vollständig von dem Innenraum des Flaschenkörpers abgetrennt ist. Ein Nachlaufen von Flüssigkeit aus dem Innenraum bei geöffneter Austrittsöffnung ist somit nicht oder nur in geringen Mengen möglich. Somit wird auf einfache Weise erreicht, dass die Spenderflasche bei Öffnung der Austrittsöffnung nur eine definierte Flüssigkeits- oder Fluidmenge abgibt. Der automatische Verschluss der Durchtrittsöffnung bei Öffnung der Austrittsöffnung bietet den weiteren Vorteil, dass ein Nachfüllen der entleerten Spenderflasche praktisch unmöglich ist. Somit wird gleichzeitig verhindert, dass eine gefüllte Spenderflasche manipuliert oder nach dem Entleeren nachgefüllt werden kann. Beide Vorgänge sind aus hygienischen Gründen sehr bedenklich.

Besonders günstig ist es, wenn die Trennplatte in dem Flaschenhals angeordnet ist. Somit ist der Flaschenhals als natürliche Trennstelle zwischen der Dosierkammer und dem Innenraum des Flaschenkörpers nutzbar. Die Trennplatte kann so mit minimalem Materialeinsatz ausgebildet werden und ist leicht in den Flaschenkörper einsetzbar.

Es kann vorgesehen sein, dass das Ventilelement in den Flaschenhals eingesetzt ist. Somit ist der Flaschenhals als Auflage- oder Befestigungsstelle des Ventilelements nutzbar.

Es kann vorgesehen sein, dass die Dosierkammer durch die Verschlusskappe zumindest nach außen umschlossen ist. Die Verschlusskappe ist somit als Aufnahme- und/oder Dosierraum oder Aufnahme- und/oder Dosiermaß für den zur Abgabe bereitgestellten Teilinhalt der Spenderflasche nutzbar.

Das erfindungsgemäße Verschlusselement bildet mit anderen Worten ein zweites Ventil, dessen Offen- und Schließstellung zu der Offen- oder Schließstellung des von dem Ventilstößel gebildeten ersten Ventils an der Austrittsöffnung gegenläufig angeordnet sind. Die Trennplatte bildet einen Ventilsockel dieses zweiten Ventils.

Die an sich bekannte Anordnung des wenigstens einen Betätigungsschenkels in dem Innenraum des Flaschenkörpers bietet den Vorteil, dass längere Verstellwege für den Ventilstößel erreichbar sind. Hierdurch kann der Ventilstößel in Schließstellung hinreichend fest in einen Ventilsitz an der Austrittsöffnung gepresst und in Offenstellung derart weit aus dem Ventilsitz zurückgezogen werden, dass das Füllmedium gut aus der Austrittsöffnung austreten kann.

Bevorzugt führt der Ventilstößel zwischen Offen- und Schließstellung eine vorzugsweise geradlinige Verstellbewegung in Längsrichtung der Spenderflasche aus.

Bei einer Ausgestaltung der Erfindung kann vorgesehen sein, dass die Trennplatte in den Flaschenhals einsetzbar oder eingesetzt ist. Somit kann die Trennplatte nach Befüllung des Flaschenkörpers einfach in ihre Gebrauchsstellung gebracht werden. Außerdem steht so zur Befüllung eine größere Öffnung am Flaschenhals zur Verfügung, als durch die Durchtrittsöffnung gebildet ist.

Bei einer Ausgestaltung der Erfindung kann vorgesehen sein, dass der wenigstens eine Betätigungsschenkel an der Trennplatte befestigt ist. Bevorzugt ist an der Befestigungsstelle ein Bereich erhöhter Elastizität vorgesehen, so dass der Betätigungsschenkel zur Betätigung des Ventilstößels schwenkbar ist. Ist die Trennplatte in den Flaschenhals einsetzbar, so kann der wenigstens eine Betätigungsschenkel auf einfache Weise mit der Trennplatte in den befüllten Flaschenkörper eingesetzt werden.

Es kann vorgesehen sein, dass der Ventilstößel an dem wenigstens einen Betätigungsschenkel aufgehängt ist. Von Vorteil ist dabei, dass sich der Ventilstößel auf einfache Weise mit dem wenigstens einen Betätigungsschenkel in den Flaschenkörper einführen und einsetzen lässt.

Bevorzugt ist vorgesehen, dass an der Trennplatte zwei Betätigungsschenkel befestigt sind, welche durch einander gegenüberliegende Seitenwände des Flaschenkörpers betätigbar sind. Auf diese Weise kann erreicht werden, dass der Ventilstößel in die Offenstellung bewegbar ist, indem ein beidseitiger Druck auf den Flaschenkörper eingebracht wird. Dieser beidseitige Druck kann beispielsweise dadurch aufgebracht werden, dass die Spenderflasche gegen einen festgehaltenen Betätigungsvorsprung gedrückt wird.

Es kann vorgesehen sein, dass der Ventilstößel in seiner Schließstellung mit Vorspannung gehalten ist. Die Vorspannung kann hierbei durch einen Federbügel eingebracht sein, welcher den Ventilstößel mit wenigstens einem Betätigungsschenkel verbindet. Beispielsweise kann der Federbügel zwei Betätigungsschenkel verbinden und aufspreizen.

Zur Erzeugung der Vorspannung kann vorgesehen sein, dass die Länge des oder eines über die Trennplatte überstehenden Teils des Ventilstößels länger ist als die lichte Höhe der Kappe. Hierbei kann die lichte Höhe der Kappe durch die Länge der Dosierkammer längs zum Ventilstößel gegeben sein. Die Vorspannung kann erzeugt werden, indem die Verschlusskappe auf das in den Flaschenhals eingesetzte Ventilelement gegen den Widerstand des Ventilstößels aufgesetzt wird. Hierdurch wird der Ventilstößel gegen seine Aufhängung in den Flaschenkörper gedrückt, wodurch sich die Vorspannung ergibt.

Der Ventilstößel kann mit einer Ventilspitze in einem Ventilsitz an der Austrittsöffnung in der Schließstellung seitlich zur Verstellbewegung fixiert und/oder zentriert werden.

Bevorzugt ist der Ventilstößel zwischen den beiden Betätigungsschenkeln angeordnet oder aufgehängt. Hierbei können die Betätigungsschenkel eine Ebene aufspannen, in welcher der Ventilstößel zwischen den Betätigungsschenkeln aufgehängt ist.

Bevorzugt ist vorgesehen, dass das Verschlusselement die Durchtrittsöffnung derart verengt, dass die Viskosität und/oder die Oberflächenspannung des Füllmediums kein Hindurchtreten durch die verengte Durchtrittsöffnung erlaubt/erlauben. Besonders günstig ist es dabei, wenn das Verschlusselement die Durchtrittsöffnung in Offenstellung des Ventilstößels dicht oder zumindest flüssigkeitsdicht verschließt.

Es hat sich herausgestellt, dass durch den außenseitig auf die elastische Seitenwand eingebrachten Druck im Inneren ein Druck aufgebaut wird, welcher sich bei geöffneter Durchtrittsöffnung in die Dosierkammer fortpflanzt und welcher bei geöffneter Austrittsöffnung und somit geschlossener oder zumindest verengter Durchtrittsöffnung eine Abgabe einer definierten Menge des Füllmediums durch die Austrittsöffnung bewirkt. Durch den Verschluss oder die Verengung der Durchtrittsöffnung entspannt sich dieser aufgebaute Druck, indem eine definierte Menge des Füllmediums durch die Austrittsöffnung abgegeben wird.

Bei einer Ausgestaltung der Erfindung kann vorgesehen sein, dass das Verschlusselement in der Offenstellung des Ventilstößels in der Dosierkammer angeordnet ist. Von Vorteil ist dabei, dass die Rückholbewegung des Ventilstößels zur Öffnung der Austrittsöffnung direkt zum Schließen oder Verengen der Durchtrittsöffnung verwendbar ist. Von Vorteil ist weiter, dass sich ein in der Dosierkammer aufgebauter Überdruck des Füllmediums nur über die Austrittsöffnung entspannt. Der erwähnte Überdruck unterstützt somit, dass das Verschlusselement in seiner Schließstellung, also in der Offenstellung des Ventilstößels, gehalten wird.

Eine besonders einfache Konstruktion ergibt sich, wenn der Ventilstößel stabförmig ausgebildet ist. Von Vorteil ist dabei, dass die Rückholbewegung des Ventilstößels aus der Schließstellung in die Offenstellung einfach ausführbar ist.

Es kann vorgesehen sein, dass sich der Ventilstößel in seiner Verlaufsrichtung beidseits des Verschlusselements erstreckt. Somit durchsetzt der beispielsweise stabförmige Ventilstößel das Verschlusselement. Mit anderen Worten kann das Verschlusselement den Ventilstößel ringförmig umgreifen. Dies ermöglicht eine besonders einfache Schließbewegung des Verschlusselements beim Öffnen der Austrittsöffnung.

Das Verschlusselement kann somit von beiden Enden des Ventilstößels beabstandet an dem Ventilstößel ausgebildet sein.

Bei einer Ausgestaltung der Erfindung kann vorgesehen sein, dass die Austrittsöffnung und die Durchtrittsöffnung jeweils eine Öffnungsfläche definieren, durch welche ein in der Spenderflasche befindliches Füllmedium förderbar ist, und dass die Öffnungsfläche der Durchtrittsöffnung größer als die Öffnungsfläche der Austrittsöffnung ist. Von Vorteil ist dabei, dass die Dosierkammer bei geschlossener Austrittsöffnung, also bei geöffneter Duchtrittsöffnung, aufgrund der Schwerkraft aus dem Innenraum mit dem Füllmedium füllbar ist, während bei geeigneter Dimensionierung der Austrittsöffnung ein allein schwerkraftbedingtes Auslaufen der Spenderflasche oder der Dosierkammer erschwert oder verhindert ist.

Bei einer Ausgestaltung der Erfindung kann vorgesehen sein, dass die Trennplatte zwischen einer am Flaschenhals ausgebildeten Trennplattenauflage und einem an der Verschlusskappe ausgebildeten Halteelement gehalten ist. Von Vorteil ist dabei, dass die Trennplatte durch das Aufsetzen der Verschlusskappe fixierbar ist, ohne dass zusätzliche Fertigungsschritte erforderlich sind.

Es kann auch vorgesehen sein, dass die Trennplatte vorzugsweise einstückig mit dem Flaschenkörper verbunden ist und/oder einstückig an dem Flaschenhals angeformt ist. Somit ist eine Montage der Trennplatte verzichtbar.

Bevorzugt ist die Trennplatte jedoch mit dem Ventilelement verbunden und/oder einstückig am Ventilelement ausgebildet.

Es kann vorgesehen sein, dass das Verschlusselement platten-oder scheibenförmig ausgebildet ist. Bevorzugt ist die Kontur des Verschlusselements auf die Kontur der Durchtrittsöffnung abgestimmt. Das Verschlusselement kann einen runden, dreieckigen, viereckigen, vieleckigen oder sternförmigen Querschnitt quer zur Längsrichtung des Ventilstößels aufweisen. Bei einem runden Querschnitt, beispielsweise einem ovalen oder speziell einem kreisrunden Querschnitt, ergeben sich besonders günstige Verhältnisse.

Eine besonders einfach fertigbare Ausgestaltung kann vorsehen, dass das Verschlusselement als Querschnittsverdickung des Ventilstößels ausgebildet ist.

Es kann auch vorgesehen sein, dass das Verschlusselement seitlich von dem Ventilstößel abragend, insbesondere entlang eines vollen Umfangs des Ventilstößels, ausgebildet ist. Von Vorteil ist dabei, dass die Verengung der Durchtrittsöffnung bei Öffnung der Austrittsöffnung einfach erreichbar ist.

Besonders günstig ist es, wenn die Durchtrittsöffnung mit dem Verschlusselement in Offenstellung des Ventilstößels flüssigkeitsdicht verschlossen ist. Von Vorteil ist dabei, dass ein in der Dosierkammer bei geöffneter Durchtrittsöffnung aufgebauter Druck in dem Flüssigkeitsmedium nicht zu einem Rücklaufen des Füllmediums in den Flaschenkörper, sondern ausschließlich zu einer definierten Abgabe des Füllmediums durch die Austrittsöffnung führt.

Es kann vorgesehen sein, dass an der Trennplatte wenigstens ein Führungselement ausgebildet ist, welches das Verschlusselement und/oder den Ventilstößel quer zu der Verstellbewegung zwischen der Schließstellung und der Offenstellung des Ventilstößels führt. Von Vorteil ist dabei, dass ein Verhaken des Verschlusselements an der Durchtrittsöffnung vermeidbar ist. Das Führungselement oder die Führungselemente können als Vorsprünge an der Trennplatte ausgebildet sein, die sich in Richtung einer Verstellbewegung und/oder wenigstens über einen oder den erwähnten Verstellweg des Ventilstößels erstrecken.

Günstig ist es, wenn das Ventilelement die Trennplatte umfasst. Somit kann das Ventilelement mit der Trennplatte in einem Arbeitsschritt in den Flaschenkörper in die Gebrauchsstellung eingesetzt werden.

Es kann vorgesehen sein, dass das Ventilelement einstückig ausgebildet ist. Beispielsweise kann das Ventilelement, vorzugsweise mit der Trennplatte und/oder den Befestigungsschenkeln, als Spritzgussteil ausgebildet sein. Dies ermöglicht eine besonders kostengünstige Fertigung. Bevorzugt sind Flaschenkörper, Verschlusskappe und Ventilelement aus gleichartigem oder kompatiblem Kunststoff gefertigt, so dass eine gemeinsame Entsorgung oder Wiederverwertung ermöglicht ist.

An der Trennplatte kann ein Sicherungselement ausgebildet sein, welches als Verdrehsicherung mit einem an dem Flaschenhals ausgebildeten Sicherungsgegenstück zusammenwirkt. Von Vorteil ist dabei, dass das Ventilelement in einer Position in Gebrauchsstellung fixierbar ist, in welcher der wenigstens eine Betätigungsschenkel über die Seitenwand betätigbar ist. Alternativ oder zusätzlich kann das Sicherungselement als Verdrehsicherung mit einem an der Verschlusskappe ausgebildeten Sicherungsgegenstück zusammenwirken.

Beispielsweise kann das Sicherungselement als Ausnehmung und das Sicherungsgegenstück als in die Ausnehmung eingreifender Vorsprung ausgebildet sein. Das Sicherungselement kann aber auch als Vorsprung und das Sicherungsgegenstück als passende Ausnehmung ausgebildet sein.

Eine Ausgestaltung der Erfindung kann vorsehen, dass das Ventilelement zwei Betätigungsschenkel aufweist, welche in Schließstellung des Ventilstößels eine maximale Außenabmessung des Ventilelements quer zu einer Längsrichtung des Ventilstößels beschreiben, welche größer als eine lichte Weite des Flaschenhalses ist. Mit anderen Worten ist die maximale Breite des in den Flaschenkörper eingesetzten Ventilelements größer als ein durch den Flaschenhals vorgegebener lichter Öffnungsdurchmesser. Somit müssen die Betätigungsschenkel aufeinander zu bewegt werden, um das Ventilelement durch den Flaschenhals einzusetzen. Bevorzugt ist diese Außenabmessung so gewählt, dass die Betätigungsschenkel an den jeweiligen Seitenwänden von innen anliegen. Von Vorteil ist dabei, dass auf diese Weise besonders lange Hubwege für den Ventilstößel erreichbar sind.

Es kann ferner vorgesehen sein, dass der Ventilstößel länger als eine lichte Höhe der Verschlusskappe ist. Somit ragt der Ventilstößel in den Innenraum des Flaschenkörpers hinein. Somit sind die Betätigungsschenkel in einer Weise anordenbar, die einen möglichst langen Verstellweg des Ventilstößels bewirken.

Bei einer Ausgestaltung der Erfindung kann vorgesehen sein, dass der Flaschenkörper einen Flaschenboden aufweist, in welchem einem Führungsnut für wenigstens eine Führungsschiene eines Halters, an welchem die Spenderflaschen einsetzbar ist, ausgebildet ist. Von Vorteil ist dabei, dass der Flaschenkörper bei der Einbringung des Drucks auf die Seitenwände zur Betätigung des Ventilstößels in einer vorbestimmten Bewegungsbahn führbar ist. Somit ist auf einfache Weise ein vorteilhafter, beidseitiger Druck auf vorzugsweise einander gegenüberliegende Seitenwände einbringbar. Hierzu kann beispielsweise manuell von einer Seite ein Druck einbringbar sein, welcher zumindest teilweise eine Bewegung des Flaschenkörpers auf einer durch das Zusammenwirken von Führungsschiene und Führungsnut bewirkt. Ist hierbei ein Betätigungsvorsprung ausgebildet, welcher die Bewegung des Flaschenkörpers behindert, so ist über den Betätigungsvorsprung bei andauernder Druckbeaufschlagung leicht eine Gegenkraft auf den Flaschenkörper einbringbar, die in eine zweiseitige Druckbeaufschlagung des Flaschenkörpers resultiert.

Zur Lösung der Aufgabe ist bei einer Spendervorrichtung der eingangs beschrieben Art erfindungsgemäß vorgesehen, dass die Spenderflasche erfindungsgemäß, insbesondere nach einem der Ansprüche 1 bis 13, ausgebildet ist.

Hierbei kann der Halter eine Führungsschiene der beschriebenen Art aufweisen, welcher in eine Führungsnut der eingesetzten Spenderflasche eingreift und diese auf einer vorgegebenen Bewegungsbahn führt.

Die Erfindung wird nun anhand von Ausführungsbeispielen näher beschrieben, ist aber nicht auf diese Ausführungsbeispiele beschränkt. Weitere Ausführungsbeispiele ergeben sich durch Kombination einzelner oder mehrerer Merkmale der Schutzansprüche untereinander und/oder mit einzelnen oder mehreren Merkmalen der Ausführungsbeispiele.

Es zeigt
- Fig. 1: eine Prinzipdarstellung einer erfindungsgemäßen Spenderflasche, bei welcher der Ventilstößel in der Schließstellung ist,
- Fig. 2: eine Einzeldarstellung des Ventilelements der Spenderflasche aus Fig. 1 in einer Ansicht von der Seite,
- Fig. 3: eine dreidimensionale Schrägansicht des Ventilelements und der Verschlusskappe der Spenderflasche gemäß Fig. 1 in Explosionsdarstellung,
- Fig. 4: eine Prinzipdarstellung der erfindungsgemäßen Spenderflasche gemäß Fig. 1, wobei der Ventilstößel in die Offenstellung bewegt ist,
- Fig. 5: eine Seitenansicht eines weiteren Ventilelements mit Verschlusskappe, welche zur Bildung einer weiteren erfindungsgemäßen Spenderflasche in dem Flaschenkörper gemäß Fig. 1 einsetzbar sind,
- Fig. 6: eine Schnittdarstellung des Ventilelements und der Verschlusskappe aus Fig. 5,
- Fig. 7: eine weitere, gegenüber der Darstellung in Fig. 5 um die Längsachse des Ventilstößels um 90° gedrehte Seitenansicht des Ventilelements und der Verschlusskappe und
- Fig. 8: eine Schnittdarstellung des Ventilstößels und der Verschlusskappe in der Orientierung gemäß Fig. 7.

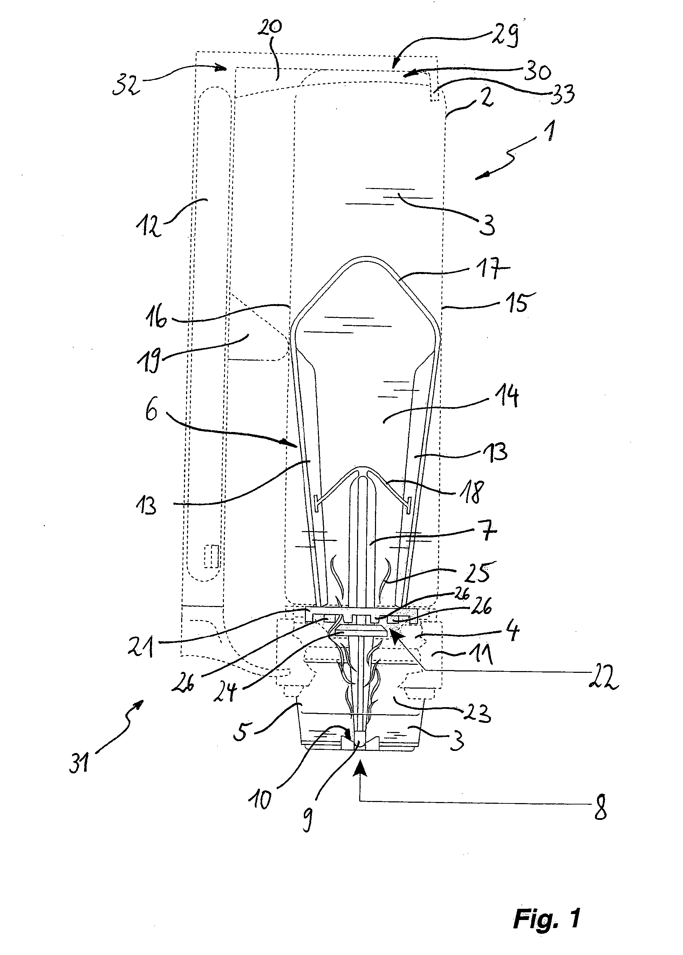

Die Fig. 1 bis 4 zeigen unterschiedliche Darstellungen eines ersten Ausführungsbeispiels einer erfindungsgemäßen Spenderflasche 1.

Die Spenderflasche 1 weist einen Flaschenkörper 2 auf, in welcher ein Füllmedium 3 bereitgehalten ist. Der Flaschenkörper 2 hat eine Längsrichtung, welche durch die Verbindungslinie zwischen dem Flaschenhals 4 und dem Flaschenboden des Flaschenkörpers 2 gegeben ist. Dies ist gleichzeitig die Längsrichtung der Spenderflasche 1.

Das Füllmedium 3 kann ein Fluid oder eine pastöse oder zähflüssige Flüssigkeit oder ein pastöses oder zähflüssiges Fluid sein.

Auf einen Flaschenhals 4 des Flaschenkörpers 2 ist eine Verschlusskappe 5 derart aufgesetzt, dass der Flaschenkörper 2 dicht verschlossen ist.

In Fig. 1 ist zur Vereinfachung der Darstellung der Flaschenkörper 2 mit gestrichelten Linien angedeutet.

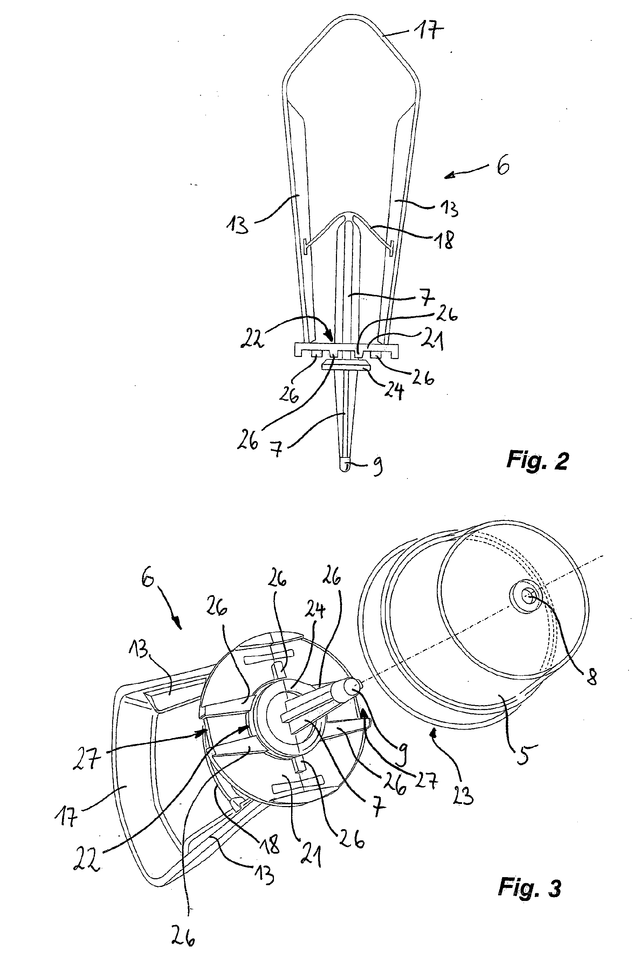

In den Flaschenhals 4 ist ein Ventilelement 6 eingesetzt. Das Ventilelement 6 ragt durch den Flaschenhals 4 und erstreckt sich in den Innenraum 14 des Flaschenkörpers. Das Ventilelement 6 ist in den Fig. 2 und 3 in Einzeldarstellung näher ersichtlich.

Das Ventilelement 6 umfasst einen stabförmigen Ventilstößel 7, mit welchem eine Austrittsöffnung 8 an der Verschlusskappe 5 öffenbar und verschließbar ist. Hierzu ist der Ventilstößel 7 entlang eines Verstellweges in Längsrichtung des Flaschenkörpers 2 verstellbar.

Fig. 1 zeigt die Schließstellung, in welcher der Ventilstößel 7 die Austrittsöffnung 8 verschließt, indem eine Ventilstößelspitze 9 mit einer Vorspannung in einen Ventilsitz 10 gepresst wird. In der Schließstellung ist die Austrittsöffnung 8 dicht verschlossen, und es kann auch in der gezeigten Überkopfmontage kein Füllmedium austreten.

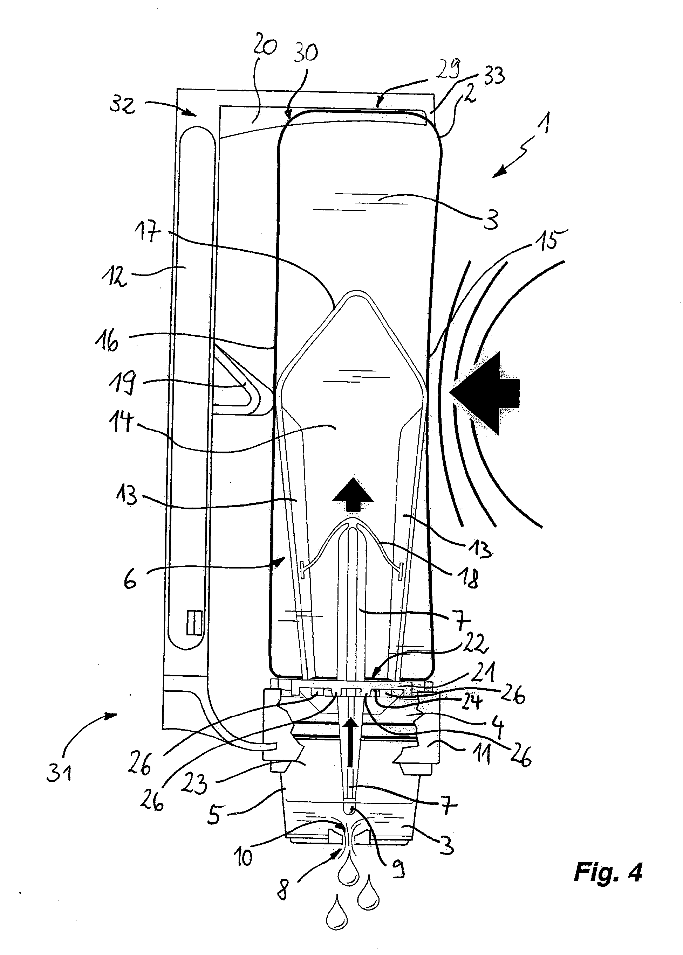

Fig. 4 zeigt den Ventilstößel 7 und somit das Ventilelement 6 in der Offenstellung, in welcher die Ventilstößelspitze 9 aus dem Ventilsitz 10 zurückgezogen ist, wodurch die Austrittsöffnung 8 freigegeben ist.

Die Spenderflasche list in Überkopfbauweise montiert, indem die Verschlusskappe 5 in einen Haltering 11 mit der Austrittsöffnung 8 nach unten eingesetzt.

Der Flaschenkörper 2 ist somit in Gebrauchsstellung oberhalb der Austrittsöffnung 8 angeordnet.

Der Haltering 11 ist an einem Halter 12 befestigt, mit welchem die Spenderflasche 1 beispielsweise an einer Wand oder an einem Gestell montiert werden kann.

Das Ventilelement 6 weist zwei Betätigungsschenkel 13 auf, welche in den Innenraum 14 des Flaschenkörpers 2 ragen.

Die Betätigungsschenkel 13 liegen jeweils von Innen nahezu an einer Seitenwand 15, 16 oder an beiden Seitenwänden 15, 16 des Flaschenkörpers 2 an. Es hat sich herausgestellt, dass ein geringfügiger Abstand zwischen den Betätigungsschenkeln 13 und der jeweils benachbarten Seitenwand 15, 16 in der Ruhelage des Ventilelements 6 günstig für den Transport der Spenderflasche 1 ist.

Die Betätigungsschenkel 13 spannen eine Ebene auf, in welcher der Ventilstößel 7 zwischen den Betätigungsschenkeln 13 angeordnet ist. In Fig. 1, 2, 4 ist diese Ebene durch die Zeichenebene gegeben.

Die Betätigungsschenkel 13 sind über einen Federbügel 17 verbunden. Der Federbügel 17 bringt die Betätigungsschenkel 13 in die in Fig. 1 gezeigte Ruheposition.

Der Ventilstößel 7 ist über ein Koppelelement 18 derart mit den Betätigungsschenkeln 13 gekoppelt, dass ein auf die Seitenwände 15 und 16 außenseitig eingebrachter Druck den Ventilstößel 7 anhebt und aus der Schließstellung in Fig. 1 in die Offenstellung gemäß Fig. 4 überführt.

Hierbei kann der erforderliche Druck auf die Seitenwand 16 manuell gegen den Betätigungsvorsprung 19 des Halters 12 gedrückt wird, wodurch die beiden Betätigungsschenkel 13 im Innenraum 14 zusammengepresst werden.

Wird der Druck auf den Flaschenkörper 2 auf die Seitenwand 15 eingebracht, so ergibt sich ein einseitiger und/oder zweiseitiger Druck auf das Ventilelement 6.

Hierbei kann sich der Flaschenkörper 2 in der Führungsschiene 20 auf den Halter 12 zu bewegen, wodurch der Betätigungsvorsprung 19 die Seitenwand 16 nach innen eindrückt.

Hierzu ist im Flaschenboden 29 des Flaschenkörpers 2 eine Führungsnut 30 ausgebildet. Der Querschnitt der Führungsnut 30 quer zu ihrer Verlaufsrichtung ist auf den Querschnitt der Führungsschiene 20 derart abgestimmt, dass der Flaschenkörper 2 auf einer vorgegebenen Bewegungsbahn geführt wird oder ist. Somit bewirkt der einseitig eingebrachte Druck eine vorgegebene Bewegung des Flaschenkörpers 2 gegen den Betätigungsvorsprung 19. Dieser drückt in der Folge die gegenüberliegende Seitenwand 16 ein und beaufschlagt so den anderen Betätigungsschenkel 13.

Bei weiteren Ausführungsbeispielen sind statt der Führungsschiene 20 zwei oder mehr parallel verlaufende, zueinander beabstandete Führungsschienen vorgesehen. Es kann hierbei vorgesehen sein, dass zwei oder mehr der Führungsschienen, bevorzugt die äußeren beiden Führungsschienen, gemeinsam in eine Führungsnut eingreifen.

In Fig. 1 ist in den Flaschenkörper 2 und dort in den Flaschenhals 4 eine Trennplatte 21 des Ventilelements 6 eingesetzt.

In der Trennplatte 21 ist eine Durchtrittsöffnung 22 ausgebildet.

Die Durchtrittsöffnung 22 verbindet den Innenraum 14 des Flaschenkörpers 2 mit einer Dosierkammer 23 im Inneren der Verschlusskappe 5. Somit kann das Füllmedium 3 durch die Durchtrittsöffnung 22 aus dem Innenraum 14 in die Dosierkammer 23 fließen. Die Dosierkammer 23 wird außenseitig durch die Verschlusskappe 5 abgeschlossen.

Es ist ersichtlich, dass sich der Ventilstößel 7 von der Austrittsöffnung 8 durch den Flaschenhals 4 in den Innenraum 14 erstreckt. Der Ventilstößel 7 ragt somit in den Innenraum 14 hinein.

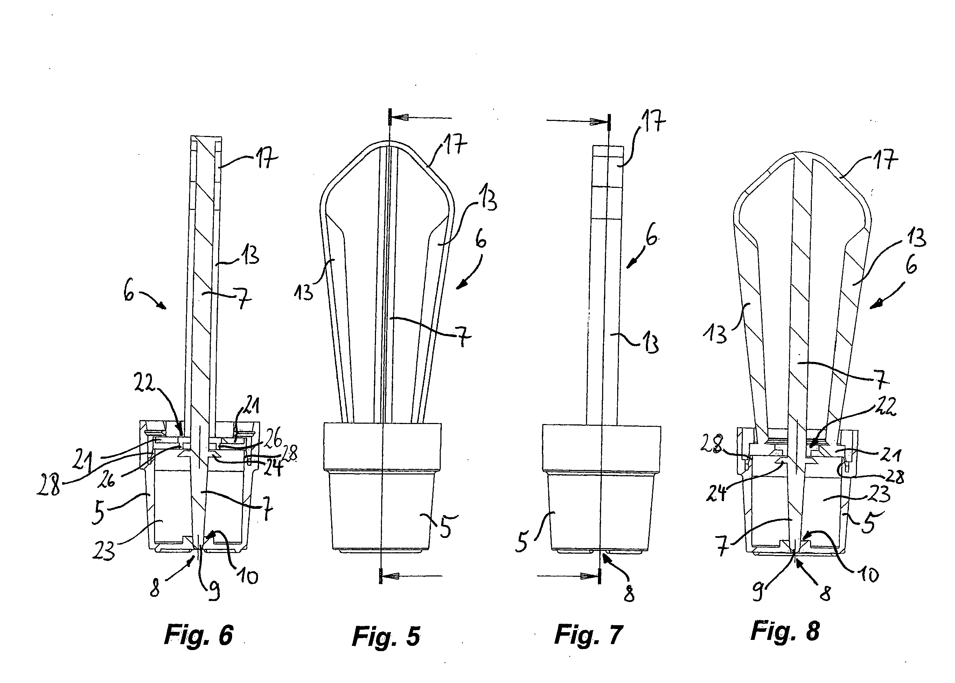

Außerhalb des Flaschenhalses 14 ragt der Ventilstößel 7 mit einer Länge in die Dosierkammer 23, welche länger als die lichte Höhe der Dosierkammer 23, also das Maß der Dosierkammer 23 längs des Ventilstößels 7, ist. Somit drückt die Verschlusskappe 5 den Ventilstößel 7 gegen die Federkraft des Koppelelements 18 (oder den Federbügel 17 in Fig. 5 bis 8), wodurch sich eine Vorspannung des Ventilstößels 7 in dessen Schließstellung ergibt.

In Fig. 1 bis 4 ist an dem Ventilstößel 7 ein Verschlusselement 24 ausgebildet.

Das Verschlusselement 24 ist platten- oder scheibenförmig ausgebildet und beabstandet von den Enden des Ventilstößels 7 an dem Ventilstößel 7 angeordnet.

Das Verschlusselement 24 ragt somit seitlich von dem Ventilstößel 7 ab und bildet eine Querschnittsverdickung des Ventilstößels 7 in dessen Längsrichtung. Der stabförmige Ventilstößel 7 durchstößt somit das Verschlusselement 24 und erstreckt sich beidseits des Verschlusselements 24 in seiner Verlaufsrichtung. Das Verschlusselement 24 umgreift entlang des Umfangs den Ventilstößel 7.

Das Verschlusselement 24 ist in der in Fig. 1 gezeigten Schließstellung des Ventilstößels 7 innerhalb der Dosierkammer 23 angeordnet. Somit ist das Verschlusselement 24 in der Schließstellung des Ventilstößels 7, in welcher die Austrittsöffnung 8 verschlossen ist, beabstandet von der Trennplatte 21 auf derjenigen Seite der Trennplatte 21 angeordnet, welcher der Verschlusskappe 5 zugewandt ist.

Auf diese Weise ist erreicht, dass die Durchtrittsöffnung 22 in der in Fig. 1 gezeigten Schließstellung des Ventilstößels 7 freigegeben ist.

Somit kann in der Schließstellung des Ventilstößels 7 das Füllmedium 3 aus dem Innenraum 14 in die Dosierkammer 23 nachlaufen, und zum Ausgleich kann Luft 25 aus der Dosierkammer 23 in den Innenraum 14 einströmen.

Wird der Ventilstößel 7 durch Druck auf die Seitenwände 15, 16 und damit auf die Betätigungsschenkel 13 in die in Fig. 4 gezeigte Offenstellung überführt, so baut sich in dem Innenraum 14 ein erhöhter Druck auf, welcher sich in die Dosierkammer 23 fortpflanzt, solang die Durchtrittsöffnung noch nicht verschlossen ist.

Am Ende der Bewegung in die Offenstellung verschließt das Verschlusselement 24 die Durchtrittsöffnung 22.

Der in der Dosierkammer 23 aufgebaute Druck lässt nun eine genau definierte Abgabemenge des Füllmediums 3 durch die in der Offenstellung des Ventilstößels 7 geöffnete Austrittsöffnung 8 austreten.

Beispielsweise kann auf diese Weise erreicht werden, dass bei einem Volumen der Dosierkammer von 30 Milliliter eine Abgabemenge von 8 Milliliter abgegeben wird, und zwar unabhängig oder nahezu unabhängig vom Füllstand des Füllmediums 3 in den Flaschenkörper 2.

Hierzu ist es besonders günstig, wenn das Verschlusselement 24 die Durchtrittsöffnung 22 nicht nur verengt, sondern vollständig und dicht verschließt, so dass der in der Dosierkammer 23 aufgebaute Druck sich nicht in den Innenraum 14 entspannen kann, sondern ausschließlich ein Austritt des Füllmediums 3 durch die Austrittsöffnung 8 bewirkt.

Die Betätigungsschenkel 13 sind einstückig mit der Trennplatte 21 verbunden und bevorzugt als Spritzgussteil hergestellt.

Somit sind die Betätigungsschenkel 13 mit der Trennplatte 21 in den befüllten Flaschenkörper 2 einsetzbar, bevor der Flaschenkörper 2 mit der Verschlusskappe 5 verschlossen wird.

Der Ventilstößel 7 ist über das Koppelelement 18 an den Betätigungsschenkeln 13 aufgehängt und kann gemeinsam mit der Trennplatte 21 und den Betätigungsschenkeln 13 in den Flaschenkörper 2 eingesetzt werden.

Aus Fig. 3 ist ersichtlich, dass die Durchtrittsöffnung 22 eine Öffnungsfläche definiert, welche größer als die Öffnungsfläche der Austrittsöffnung 8 ist.

Somit kann die Durchtrittsöffnung 22 so dimensioniert sein, dass das Füllmedium 3 aufgrund der Schwerkraft bei geöffneter Durchtrittsöffnung 22 aus dem Innenraum 14 in die Dosierkammer 23 fließen kann. Die Austrittsöffnung 8 ist dagegen so dimensionierbar, dass das Füllmedium 3 aufgrund seiner Viskosität und Oberflächenspannung nicht allein durch die Schwerkraft aus der Austrittsöffnung 8 fließen kann. Vielmehr ist hierfür ein zusätzlicher Innendruck in der Dosierkammer 23 erforderlich.

Nach dem Einsetzen des Ventilelements 6 in den Flaschenhals 4 wird die Verschlusskappe 5 aufgesetzt, und das Ventilelement 6 wird mit der Trennplatte 21 zwischen der Verschlusskappe 5 einerseits und dem Flaschenkörper 2 andererseits eingeklemmt und so gehalten und fixiert.

Hierzu ist an dem Flaschenhals 4 eine nicht weiter dargestellte Trennplattenauflage ausgebildet, an welcher die Trennplatte 21 anliegt. An der Verschlusskappe 5 ist ein ebenfalls nicht weiter dargestelltes Halteelement ausgebildet, welches die Trennplatte 21 beaufschlagt und fixiert.

Das Verschlusselement 24 ist so ausgebildet, dass es die Durchtrittsöffnung 22 flüssigkeitsdicht verschließen kann.

Um zu verhindern, dass das Verschlusselement 24 an der Trennplatte 21 verhakt, sind an der Trennplatte 21 Führungselemente 26 in Form von in die Dosierkammer 23 abragenden Vorsprüngen ausgebildet, welche das Verschlusselement 24 und somit den Ventilstößel 7 quer zu der Verstellbewegung zwischen der Schließstellung und der Offenstellung des Ventilstößels 7 führen.

Bei dem Ausführungsbeispiel gemäß Fig. 1 bis 4 ist der Ventilstößel 7 mit dem Verschlusselement 24 einstückig als Spritzgussteil ausgebildet.

An der Trennplatte 21 ist an einem Umfangsabschnitt ein Sicherungselement 27 als Ausnehmung ausgebildet, welches in ein am Flaschenhals 4 korrespondierend ausgebildetes Sicherungsgegenstück in Form eines Vorsprungs eingesetzt ist, um ein Verdrehen des eingesetzten Ventilelements 6 gegenüber der Gebrauchsstellung zu verhindern.

Aus den Fig. 1 und 4 ist weiter ersichtlich, dass die Betätigungsschenkel 13 mit ihren von der Trennplatte 21 abgewandten Enden eine maximale Außenabmessung quer zu der Längsrichtung des Ventilstößels 7 definieren, welche größer als die lichte Weite des Flaschenhalses 4 ist. Somit müssen die Betätigungsschenkel 13 gegeneinandergepresst werden, um das Ventilelement 6 in den Flaschenhals 4 einzusetzen.

Der Flaschenhals 4 bildet den Ventilsockel des Ventilelements 6.

Fig. 1 und 4 zeigen insgesamt eine Spendervorrichtung 31 mit einem Halter 12. In den Halter 12 ist die erfindungsgemäße Spenderflasche 1 eingesetzt. Hierzu weist der Halter 12 einen Halterring 11 auf, welcher zur Entnahme der Spenderflasche 1 lösbar mit den übrigen Bauteilen des Halters 12 verbunden ist. Am oberen Ende ist an dem Halter 12 ein Haltebügel 32 ausgebildet. Der Haltebügel 32 übergreift den Flaschenkörper 2 an dessen Flaschenboden 29. An der Unterseite oder der dem Flaschenkörper 2 zugewandten Seite des Haltebügels 32 ist die wenigstens eine Führungsschiene 20 ausgebildet, welche in,den Flaschenboden 25 eingreift. Der Haltebügel 32 endet an seinem freien Ende in einem Anschlag 33. Der Anschlag 33 begrenzt die Bewegungsbahn und kann dazu dienen, die Entnahme der Spenderflasche 1 zu verhindern und/oder die Spenderflasche 1 zur Betätigung bereitzuhalten.

Die Fig. 5 bis 8 zeigen ein weiteres Ausführungsbeispiels eines Ventilelements 6. Dieses Ventilelement 6 kann statt des Ventilelements 6 in Fig. 1 bis 4 in den dort dargestellten Flaschenkörper 2 zur Bildung einer erfindungsgemäßen Spenderflasche 1 eingesetzt werden.

Bei dem in den Fig. 5 bis 8 gezeigten Ausführungsbeispiel sind funktionell oder konstruktiv zu dem Ausführungsbeispiel gemäß Fig. 1 bis Fig. 4 gleichartige oder äquivalente Bauteile mit denselben Bezugszeichen bezeichnet und nicht noch einmal gesondert beschrieben.

Im Unterschied zu dem Ausführungsbeispiel gemäß Fig. 1 bis Fig. 4 ist bei dem Ausführungsbeispiel gemäß Fig. 5 bis Fig. 8 der Ventilstößel 7 direkt an dem Federbügel 17 aufgehängt und einstückig mit diesen verbunden. Auch hier ist der Ventilstößel 7 zwischen den Betätigungsschenkeln 13 in der von den Betätigungsschenkeln 13 aufgespannten Ebene - der Zeichenebene in Fig. 5 und 8 - angeordnet.

Das Ventilelement 6 ist einstückig als Spritzgussteil aus Kunststoff gefertigt und umfasst den Ventilstößel 7 mit dem Verschlusselement 24, die beiden Betätigungsschenkel 13, den Federbügel 17 und die Trennplatte 21.

Der Federbügel 17 beaufschlagt in Schließstellung den Ventilstößel 7 mit einer Vorspannung. Hierdurch wird der Ventilstößel 7 in den Ventilsitz 10 gepresst. Die Austrittsöffnung 8 ist somit dauerhaft dicht verschließbar, selbst wenn der Federbügel 17 durch Materialalterung im Laufe der Zeit nachgeben sollte. Die Vorspannung wird erreicht, indem der Ventilstößel 7 bei entspanntem Federbügel 17 so relativ zum Flaschenhals 4 angeordnet ist, dass er durch die aufgesetzte Verschlusskappe 5 in den Innenraum 14 gedrückt wird.

Außerdem sind noch die in Fig. 1 bis Fig. 4 bereits erwähnten Halteelemente 28 an der Verschlusskappe 5 ersichtlich, durch welche die eingesetzte Trennplatte 21 zwischen Verschlusskappe 5 und Flaschenhals 4 eingeklemmt und gehalten ist.

Bei der Spenderflasche 1 mit einem Flaschenkörper 2 und einer Verschlusskappe 5 und einem in den Flaschenkörper 2 eingesetzten Ventilelement 6, mit welchem eine Austrittsöffnung 8 der Verschlusskappe 5 verschließbar und öffenbar ist, wird vorgeschlagen, an einer Trennplatte 21, welche eine in der Verschlusskappe 5 ausgebildete Dosierkammer 23 von dem Innenraum 14 des Flaschenkörpers 2 abtrennt, eine Durchtrittsöffnung 22 auszubilden und ein Verschlusselement 24 mit dem Ventilelement 6 derart zu koppeln, dass das Verschlusselement 24 bei geöffneter Austrittsöffnung 8 die Durchtrittsöffnung 22 verengt oder verschließt und bei verschlossener Austrittsöffnung 8 die Durchtrittsöffnung 22 freigibt.

## Patentansprüche

1. Spenderflasche (1), insbesondere in Überkopfbauweise, mit einer auf einen Flaschenhals (4) eines Flaschenkörpers (2) dicht aufgesetzten Verschlusskappe (5) und mit einem in den Flaschenkörper (2) eingesetzten Ventilelement (6), wobei das Ventilelement (6) einen Ventilstößel (7) aufweist, welcher zwischen einer Schließstellung, in welcher eine Austrittsöffnung (8) der Verschlusskappe (5) durch den Ventilstößel (7) verschlossen ist, und einer Offenstellung, in welcher die Austrittsöffnung (8) geöffnet ist, beweglich ist, und wobei das Ventilelement (6) wenigstens einen Betätigungsschenkel (13) aufweist, welcher in einem Innenraum (14) des Flaschenkörpers (2) angeordnet und mit dem Ventilstößel (7) derart gekoppelt ist, dass durch einen außenseitig auf eine elastische Seitenwand (15, 16) des Flaschenkörpers (2) eingebrachten Druck der Ventilstößel (7) aus der Schließstellung in die Offenstellung überführbar ist, und wobei in dem Flaschenkörper (2) eine Trennplatte (21) mit einer Durchtrittsöffnung (22) ausgebildet oder angeordnet ist, durch welche eine von der Verschlusskappe (5) gebildete Dosierkammer (23) von dem Innenraum (14) des Flaschenkörpers (2) abgeteilt ist, wobei der Ventilstößel (7) durch die Durchtrittsöffnung (22) geführt ist, **dadurch gekennzeichnet, dass** an dem Ventilstößel (7) ein Verschlusselement (24) ausgebildet ist, welches die Durchtrittsöffnung (22) in Offenstellung des Ventilstößels (7) verengt oder verschließt und welches die Durchtrittsöffnung (22) in Schließstellung des Ventilstößels (7) freigibt.

2. Spenderflasche (1) nach Anspruch 1, dadurch gekennzeich-. net, dass die Trennplatte (21) in den Flaschenhals (4) einsetzbar oder eingesetzt ist und/oder dass der wenigstens eine Betätigungsschenkel (13) an der Trennplatte (21) befestigt ist und/oder dass der Ventilstößel (7) an dem wenigstens einen Betätigungsschenkel (13) aufgehängt ist.

3. Spenderflasche (1) nach Anspruch 1 oder 2, **dadurch gekennzeichnet, dass** die Durchtrittsöffnung (22) mit dem Verschlusselement (24) in Offenstellung des Ventilstößels (7) flüssigkeitsdicht verschlossen ist.

4. Spenderflasche (1) nach einem der Ansprüche 1 bis 3, **dadurch gekennzeichnet, dass** der Ventilstößel (7) stabförmig ausgebildet ist und/oder dass sich der Ventilstößel (7) in seiner Verlaufsrichtung beidseits des Verschlusselements (24) erstreckt.

5. Spenderflasche (1) nach einem der Ansprüche 1 bis 4, **dadurch gekennzeichnet, dass** das Verschlusselement (24) in der Offenstellung des Ventilstößels (7) in der Dosierkammer (23) angeordnet ist.

6. Spenderflasche (1) nach einem der Ansprüche 1 bis 5, **dadurch gekennzeichnet, dass** die Austrittsöffnung (8) und die Durchtrittsöffnung (22) jeweils eine Öffnungsfläche definieren, durch welche ein in der Spenderflasche (1) befindliches Füllmedium förderbar ist, und dass die Öffnungsfläche der Durchtrittsöffnung (22) größer als die Öffnungsfläche der Austrittsöffnung (8) ist.

7. Spenderflasche (1) nach einem der Ansprüche 1 bis 6, **dadurch gekennzeichnet, dass** die Trennplatte (21) zwischen einer am Flaschenhals (4) ausgebildeten Trennplattenauflage und einem an der Verschlusskappe (5) ausgebildeten Halteelement (28) gehalten ist.

8. Spenderflasche (1) nach einem der Ansprüche 1 bis 7, **dadurch gekennzeichnet, dass** das Verschlusselement (24) platten- oder scheibenförmig ausgebildet ist und/oder dass das Verschlusselement (24) als Querschnittsverdickung des Ventilstößels (7) und/oder seitlich von dem Ventilstößel (7) abragend ausgebildet ist.

9. Spenderflasche (1) nach einem der Ansprüche 1 bis 8, **dadurch gekennzeichnet, dass** an der Trennplatte (21) wenigstens ein Führungselement (26) ausgebildet ist, welches das Verschlusselement (24) und/oder den Ventilstößel (7) quer zu der Verstellbewegung zwischen der Schließstellung und der Offenstellung des Ventilstößels (7) führt.

10. Spenderflasche (1) nach einem der Ansprüche 1 bis 9, **dadurch gekennzeichnet, dass** das Ventilelement (6) die Trennplatte (21) umfasst und/oder dass das Ventilelement (6) einstückig ausgebildet ist.

11. Spenderflasche (1) nach einem der Ansprüche 1 bis 10, **dadurch gekennzeichnet, dass** an der Trennplatte (21) ein Sicherungselement (27) ausgebildet ist, welches als Verdrehsicherung mit einem an dem Flaschenhals (4) und/oder an der Verschlusskappe (5) ausgebildeten Sicherungsgegenstück zusammenwirkt.

12. Spenderflasche (1) nach einem der Ansprüche 1 bis 11, **dadurch gekennzeichnet, dass** das Ventilelement (6) zwei Betätigungsschenkel (13) aufweist, welche in Schließstellung des Ventilstößels (7) eine maximale Außenabmessung des Ventilelements (6) quer zu einer Längsrichtung des Ventilstößels (7) beschreiben, welche größer als eine lichte Weite des Flaschenhalses (4) ist und/oder dass die maximale Breite des in den Flaschenkörper eingesetzten Ventilelements größer als ein durch den Flaschenhals (4) vorgegebener lichter Öffnungsdurchmesser ist und/oder dass der Ventilstößel (7) länger als eine lichte Höhe der Verschlusskappe (5) ist.

13. Spenderflasche (1) nach einem der Ansprüche 1 bis 12, **dadurch gekennzeichnet, dass** der Flaschenkörper (2) einen Flaschenboden (29) aufweist, in welchem einem Führungsnut (30) für wenigstens eine Führungsschiene (20) eines Halters (12), an welchem die Spenderflaschen (1) einsetzbar ist, ausgebildet ist.

14. Spendervorrichtung (31) mit einem Halter (12) und einer in den Halter (12) eingesetzten oder einsetzbaren Spenderflasche (1), **dadurch gekennzeichnet, dass** die Spenderflasche (1) nach einem der vorangegangenen Ansprüche ausgebildet ist.
